Europäisches Patentamt

European Patent Office

Office européen des brevets

(19)

(11) Numéro de publication: **0 377 351**
**A1**

(12) **DEMANDE DE BREVET EUROPEEN**

(21) Numéro de dépôt: **89403171.5**

(22) Date de dépôt: **17.11.89**

(51) Int. Cl.5: **C08G 77/60, C04B 35/00, C04B 35/56**

(30) Priorité: **25.11.88 FR 8815391**

(43) Date de publication de la demande:
**11.07.90 Bulletin 90/28**

(84) Etats contractants désignés:
**AT BE CH DE ES FR GB GR IT LI LU NL SE**

(71) Demandeur: **RHONE-POULENC CHIMIE**
**25, quai Paul Doumer**
**F-92408 Courbevoie Cédex(FR)**

(72) Inventeur: **Birot, Marc**
**7, Rue Bellevue**
**F-33850 Leognan(FR)**
Inventeur: **Dunogues, Jacques**
**22, Avenue du Président Poincaré**
**F-33400 Talence(FR)**
Inventeur: **Olry, Pierre**
**27, Rue Edmond Costedoat**
**F-33000 Bordeaux(FR)**

(74) Mandataire: **Cazes, Jean-Marie et al**
**RHONE-POULENC CHIMIE Service Brevets**
**Chimie 25, Quai Paul Doumer**
**F-92408 Courbevoie Cédex(FR)**

(54) **Procédé d'obtention d'un polycarbosilane filable et céramisable.**

(57) L'invention a trait à un procédé d'obtention d'un polycarbosilane filable et céramisable à partir d'un polycarbosilane brut de synthèse contenant des polymères ayant des poids moléculaires élevés, notamment supérieurs à environ 25 000, et qui est caractérisé par le fait qu'il consiste à éliminer dudit polycarbosilane brut la quasi-totalité desdits polymères par mise en contact dudit polycarbosilane brut avec de l'acétate d'éthyle, puis à récupérer la fraction du polycarbosilane brut qui a été ainsi dissoute.

EP 0 377 351 A1

## PROCEDE D'OBTENTION D'UN POLYCARBOSILANE FILABLE ET CERAMISABLE

La présente invention concerne un procédé pour l'obtention d'un polycarbosilane filable et céramisable.

Un procédé, connu dans son principe, pour la préparation de fibres en carbure de silicium consiste, à partir d'un polysilane, à provoquer tout d'abord un réarrangement de ce polysilane en polycarbosilane, puis à filer ce polycarbosilane et enfin à transformer, par une opération dite de céramisation, ce fil de polycarbosilane en fil de carbure de silicium.

Or, les procédés utilisés jusqu'à ce jour pour provoquer le réarrangement du polysilane en polycarbosilane conduisent à un polycarbosilane hétérogène quant à la répartition de sa masse moléculaire et à son degré de branchement, et donc à un polycarbosilane difficilement filable. Il convient donc de traiter ledit polycarbosilane brut de façon à obtenir un produit que l'on pourra aisément filer et ultérieurement céramiser en carbure de silicium.

La présente invention concerne donc un procédé d'obtention d'un polycarbosilane filable et céramisable à partir d'un polycarbosilane brut contenant des polymères ayant des poids moléculaires élevés, notamment supérieurs à environ 25000, et qui est caractérisé par le fait qu'il consiste à éliminer dudit polycarbosilane brut la quasi-totalité desdits polymères par mise en contact dudit polycarbosilane brut avec de l'acétate d'éthyle, puis a récupérer la fraction du polycarbosilane brut qui a été ainsi dissoute dans l'acétate d'éthyle.

Mais d'autres caractéristiques, aspects et avantages de l'invention apparaitront encore plus précisement à la lecture de la description qui va suivre et des exemples concrets, mais non limitatifs, relatifs à sa mise en oeuvre.

Le polycarbosilane brut utilisé comme produit de départ dans la présente invention est le composé obtenu, selon des techniques antérieurement décrites, et notamment dans le brevet FR-A-2 308 650, par chauffage d'un polysilane (homo ou copolymère). Ce produit brut est formé de polymères de masses moléculaires et de branchements très différents puisque on y trouve couramment des polymères dont les masses moléculaires varient de 10 000 à plus de 100 000. Or il a été trouvé que pour pouvoir filer convenablement ce polycarbosilane, il convenait d'utiliser un polymère (ou copolymère) dont la répartition des masses moléculaires est relativement étroite par exemple comprise entre environ 15 000 et environ 25 000. Le procédé selon la présente invention permet d'éliminer du polycarbosilane brut à peu près tous les polymères ayant des masses moléculaires supérieures à environ 25 000.

Pour réaliser cette élimination des hautes masses moléculaires des polycarbosilanes bruts, il a été trouvé que l'on pouvait avantageusement utiliser la solubilité d'une partie desdits polycarbosilanes bruts dans certains solvants. Parmi les solvants potentiellement utilisables, des impératifs techniques, industriels et économiques ont conduit à sélectionner l'acétate d'éthyle.

Les études systématiques de solubilité des polycarbosilanes dans l'acétate d'éthyle et les essais de filage réalisés sur les produits solubles obtenus ont montré par ailleurs qu'il était souhaitable de mettre en contact les polycarbosilanes bruts avec l'acétate d'éthyle à des températures comprises entre environ 25°C et environ 55°C. Si l'on utilise des températures inférieures à 25°C environ, on peut éliminer certains polymères de masse relativement élevée (par exemple 20 000), qu'il conviendrait au contraire de conserver pour le filage ; si l'on utilise des températures supérieures à 55°C environ, il arrive souvent que les fils obtenus soient de qualité inférieure du fait qu'ils comportent une proportion trop importante de polymères de masse moléculaire élevée.

En outre, la sélection d'un polycarbosilane convenable est également liée au rapport de la quantité de polycarbosilane brut à la quantité d'acétate d'éthyle. Ce rapport a une importance technique moins grande que celle résultant des choix convenables des températures. On conçoit que si la proportion d'acétate d'éthyle est trop faible on risque de ne pas récupérer, dans le polycarbosilane brut, la totalité des polymères utiles et que si la proportion d'acétate d'éthyle est très élevée, il sera nécessaire, pour récupérer le polymère utile, d'éliminer, par évaporation par exemple, une très grande quantité de solvant. Dans la pratique, on utilisera environ 1 partie en poids de polycarbosilane brut pour environ 4 à 8 parties en poids d'acétate d'éthyle.

Bien entendu, la fraction du polycarbosilane qui ne s'est pas dissoute dans l'acétate d'éthyle, et qui est donc constituée pour l'essentiel de polymères à hauts poids moléculaires, peut elle-même trouver des applications utiles, notamment pour la préparation de poudres céramiques à base de carbure de silicium.

Dans les exemples non limitatifs ci-après on décrit un procédé de mise en oeuvre de l'invention.

Exemples 1 à 9

On a utilisé le mode opératoire type suivant : un échantillon de polycarbosilane brut (PCS), dont la quantité utilisée en poids est donnée sur le tableau ci-après, est ajouté, par petites portions, sous vigoureuse agitation, à une quantité donnée (indiquée sur le tableau) d'acétate d'éthyle commercial, à la température indiquée, pour chaque essai, sur le tableau. Le PCS utilisé à été synthétisé par chauffage d'un polydiméthylsilane a 470°C dans un autoclave, selon le mode opératoire décrit par S. YAJIMA et al (J. Mater. Sci., 1978 (13), 2569, et demande de brevet français FR-A-2 308 650). L'addition terminée, l'agitation est maintenue pendant deux heures à la même température, puis on filtre (sur un entonnoir de Buchner en utilisant un papier filtre DURIEUX par exemple n°111 à filtration lente), le plus rapidement possible.

Le précipité est ensuite lavé avec 200 ml d'acétate d'éthyle supplémentaires, à température ambiante, puis la solution est évaporée a l'évaporateur rotatif et séchée ensuite, dans une étuve à vide, à 60°C sous 2-3 mmHg, pendant un temps variable dont la durée est indiquée dans le tableau ci-après qui résume l'ensemble des résultats.

L'étude chromatographique, par perméation de gel, confirme que les "produits légers" obtenus ne comportent plus de polycarbosilanes de poids moléculaires élevés (supérieurs à environ 25 000) et les études de filage confirment que lesdits produits légers conduisent bien à des fils et fibres possédant des propriétés suffisantes pour pouvoir être ultérieurement manipulés et céramisés.

Exemple 10 :

En reprenant la technique décrite ci-dessus on a mis en contact 1 kg de polycarbosilane brut avec 4 litres d'acétate d'éthyle. La température a été fixée a 27°C.

On a recueilli 400 g de polycarbosilane parfaitement filable et céramisable.

EP 0 377 351 A1

TABLEAU

| Exemples | Poids de PCS au départ (grammes) | Quantité de MeCOOEt (litres) | Température de dissolution (°C) | Durée de séchage (heures) | Poids de produits légers (g) (% par rapport* au produit de départ) | Poids de produits lourds (g) (% par rapport* au produit de départ) |
|---|---|---|---|---|---|---|
| 1 | 750 | 6 | 50 | 36 | 497(66) | 248(32) |
| 2 | 900 | 7,2 | 50 | 4 | 660(73) | 255(28,3) |
| 3 | 1000 | 6 | 30 | 14 | 582(58) | 430(43) |
| 4 | 1000 | 6 | 30 | 14 | 530(53) | 500(50) |
| 5 | 1000 | 6 | 30 | 4 | 618(62) | 430(43) |
| 6 | 1000 | 6 | 35 | 36 | 575(57,5) | 425(42,5) |
| 7 | 1000 | 6 | 35 | 4 | 475(47,5) | 530(53) |
| 8 | 1000 | 6 | 35 | 4 | 600(60) | 400(40) |
| 9 | 1000 | 6 | 35 | 3 | 540(54) | 480(48) |

* : si l'ensemble des produits récupérés dépasse souvent 100 %, ceci est dû à un séchange insuffisant.

**Revendications**

1/ Procédé d'obtention d'un polycarbosilane filable et céramisable à partir d'un polycarbosilane brut contenant des polymères ayant des poids moléculaires élevés, notamment supérieurs à environ 25 000, caractérisé par le fait qu'il consiste à éliminer dudit polycarbosilane brut la quasi-totalité desdits polymères par mise en contact dudit polycarbosilane brut avec de l'acétate d'éthyle, puis à récupérer la fraction du polycarbosilane brut qui a été ainsi dissoute dans l'acétate d'éthyle.

2/ Procédé selon la revendication 1 caractérisé en ce que ladite mise en contact se fait à une température comprise entre environ 25°C et environ 55°C.

3/ Procédé selon l'une quelconque des revendications précédentes, caractérisé en ce que l'on utilise environ une partie en poids de polycarbosilane brut pour environ 4 à 8 parties en poids d'acétate d'éthyle.

5

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| Y | FR-A-2 406 650 (CENTRE NATIONAL D'ETUDES SPATIALES) * Revendication 1 * --- | 1 | C 08 G 77/60<br>C 04 B 35/00<br>C 04 B 35/56 |
| D,Y | FR-A-2 308 590 (RESEARCH INSTITUTE FOR IRON, STEEL AND OTHER METALS) * Revendication 1; page 15, lignes 12-27,34-37; page 16, lignes 1-3; exemple 1, page 26; exemple 8, page 29; exemple 54, page 58 * ----- | 1 | |

**DOMAINES TECHNIQUES RECHERCHES (Int. Cl.5)**

C 08 G
C 08 L
C 04 B

Le présent rapport a été établi pour toutes les revendications

| Lieu de la recherche | Date d'achèvement de la recherche | Examinateur |
|---|---|---|
| LA HAYE | 17-04-1990 | DEPIJPER R.D.C. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
.................................................................
& : membre de la même famille, document correspondant

EPO FORM 1503 03.82 (P0402)